# EUROPEAN PATENT APPLICATION

(11) **EP 3 162 429 A1**
(43) Date of publication of application: **03.05.2017**
(21) Application number: 15191681.4
(22) Date of filing: 27.10.2015
(51) Int. Cl.: B01D 67/00, B01D 69/02, B01D 71/68

(54) **PROCESS FOR THE PREPARATION OF A MEMBRANE WHICH COMPRISES A POLYETHERSULFONE POLYMER AND A POLYAMIDE POLYMER**

(71) Applicant: BASF SE, 67056 Ludwigshafen am Rhein (DE)
(72) Inventor: CHUA, Soo Keow, 680418 Singapore (SG); TAN, Kok Wah, 738098 Singapore (SG); NG, Say Khiam, 416438 Singapore (SG); BAUMERT, Martin, 69221 Dossenheim (DE); LOW, Jia Le, 100065 Singapore (SG); WIDJOJO, Natalia, 650171 Singapore (SG); JUNG, Marc Rudolf, 098652 Singapore (SG)
(74) Representative: BASF IP Association

(57) **Abstract**

The present invention relates to a process for the preparation of a membrane (M) which comprises a polyethersulfone polymer and a polyamide polymer. In this process, a solution (S) is used which comprises the polyethersulfone polymer, the polyamide polymer and at least one first protic polar solvent. From this at least one first protic polar solvent, the polyethersulfone polymer and the polyamide polymer are separated to obtain the membrane (M). Another object of the present invention is the use of a polyamide polymer in the membrane (M) which comprises a polyethersulfone polymer to increase the elongation at break of the membrane (M). The present invention also relates to a membrane (M) which comprises a polyethersulfone polymer and a polyamide polymer.

## Description

The present invention relates to a process for the preparation of a membrane (M) which comprises a polyethersulfone polymer and a polyamide polymer. In this process, a solution (S) is used which comprises the polyethersulfone polymer, the polyamide polymer and at least one first protic polar solvent. From this at least one first protic polar solvent, the polyethersulfone polymer and the polyamide polymer are separated to obtain the membrane (M). Another object of the present invention is the use of a polyamide polymer in the membrane (M) which comprises a polyethersulfone polymer to increase the elongation at break of the membrane (M). The present invention also relates to a membrane (M) which comprises a polyethersulfone polymer and a polyamide polymer.

Polyethersulfone polymers belong to the group of polyarylene ethers. Polyarylene ethers are high-performance thermoplastics and feature high heat resistance, good mechanical properties and inherent flame retardancy. As polyarylene ethers have good biocompatibility, they are also used as materials for producing dialysis membranes.

However, polyarylene ethers that are described in the state of the art often have inadequate mechanical properties for membrane applications. They have a lower elongation at break (lower membrane flexibility) as compared to a polyvinylidene fluoride (PVDF) material (which is the competitor of polyethersulfone (PES) materials, in particular for ultrafiltration (UF) application) for example. As a result, the hollow fiber membranes from PES have higher tendency to experience fiber breakage during cleaning (backwash) as compared to PVDF material. Moreover, for some applications the functionality, in particular the permeability and the selectivity of polyethersulfone membranes, is not sufficient.

Therefore, K. B. Lee et al., Journal of Membrane Science, 2011, 370, 1-22*,* describe a method to modify the functionality of polyarylethersulfone membranes. In this process, the polyarylethersulfone membrane is produced as a first layer and on this layer a second layer is casted which is for example made of aromatic polyamide. However, the thus obtained two-layer membranes exhibit several drawbacks, in particular in some cases the coherence between the two layers is low and when subjected to mechanical stress, the layers can separate from each other. Moreover, their mechanical properties like the tensile strength and the elongation at break is still low due to the use of polyethersulfone polymers for the first membrane layer.

The object underlying the present invention is therefore to provide a process for the preparation of a membrane (M) which does not have the above-mentioned disadvantages of the prior art or has them only to a significantly reduced extent. In particular, the process should be carried out in a more simple, safer and more cost efficient way than the processes described in the state of the art.

This object was solved by a process for the preparation of a membrane (M) which comprises a polyethersulfone polymer and a polyamide polymer, comprising the steps:
i) providing a solution (S), which comprises the polyethersulfone polymer, the polyamide polymer and at least one first protic polar solvent,
ii) separating the polyethersulfone polymer and the polyamide polymer comprised in the solution (S) from the at least one first protic polar solvent comprised in the solution (S) to obtain the membrane (M).

It has surprisingly been found that by the use of a polyamide polymer in a membrane (M) which comprises a polyethersulfone polymer, the mechanical properties of the membrane (M) can be significantly increased. In particular, the polyamide polymer leads to a higher tensile strain at break and a high elongation at break.

Moreover, it has surprisingly been found that the membrane (M) can be produced from a solution (S) which comprises the polyethersulfone polymer and the polyamide polymer. By the inventive process, the number of casting steps, therefore, can be reduced with respect to the processes described in the state of the art. This makes the inventive process very time and cost efficient and, therefore, highly economic.

The present invention will be described in more detail hereinafter.

### Step i)

In step i), a solution (S) which comprises the polyethersulfone polymer, the polyamide polymer and at least one first protic polar solvent is provided.

"A polyethersulfone polymer" within the context of the present invention means precisely one polyethersulfone polymer and also a mixture of two or more polyethersulfone polymers. The same holds true for "a polyamide polymer". "A polyamide polymer" within the context of the present invention means precisely one polyamide polymer and also a mixture of two or more polyamide polymers.

"At least one first protic polar solvent" means precisely one first protic polar solvent and also a mixture of two or more first protic polar solvents.

Moreover, in one embodiment the solution (S) can comprise one or more further polymers different from polyethersulfone polymers and polyamide polymers. In another embodiment the solution (S) does not comprise a further polymer different from polyethersulfone polymers and polyamide polymers.

The solution (S) can additionally comprise further solvents that differ from the first protic polar solvent. For example the solution (S) can additionally comprise aprotic polar solvents. Suitable aprotic polar solvents are known to the skilled person and are for example selected from the group consisting of N-methyl-pyrrolidone, dimethylformamide, dimethylacetamide, tetrahydrofuran, dimethylsulfoxide and acetone.

The solution (S) can be provided in step i) by any method known to the skilled person. Preferably, the solution (S) is provided in step i) in customary vessels, particularly in those which comprise a stirring device and preferably a temperature control device.

Preferably, the solution (S) is provided by dissolving the polyethersulfone polymer and the polyamide polymer in the at least one first protic polar solvent.

The dissolution of the polyethersulfone polymer and the polyamide polymer in the at least one first protic polar solvent to provide the solution (S) is preferably affected under agitation. The dissolution of the polyethersulfone polymer and the polyamide polymer may be effected concurrently or in succession.

Step i) is preferably carried out at elevated temperatures, especially in the range from 20 to 120°C, preferably in the range from 40 to 100°C. A person skilled in the art will chose the temperature in accordance with the at least one first protic polar solvent.

The solution (S) preferably comprises the polyethersulfone polymer and the polyamide polymer completely dissolved in the at least one first protic polar solvent. This means that the solution (S) preferably comprises no solid particles of the polyethersulfone polymer and/or the polyamide polymer. Therefore, the polyethersulfone polymer and the polyamide polymer preferably cannot be separated from the at least one first protic polar solvent by filtration.

The solution (S), for example, comprises from 5 to 30% by weight, preferably from 10 to 25% by weight and particularly preferably from 14 to 22% by weight of the polyethersulfone polymer, based on the sum of the percent by weight of the polyethersulfone polymer, the polyamide polymer and the at least one first protic polar solvent, preferably based on the total weight of the solution (S).

Another object of the present invention is therefore a process wherein the solution (S) comprises in the range from 5 to 30 % by weight of the polyethersulfone polymer based on the total amount of the solution (S).

The solution (S), for example, comprises in the range from 0.0001 to 8% by weight, preferably from 0.1 to 4% by weight and particularly preferably from 0.5 to 3% by weight of the polyamide polymer, based on the sum of the percent by weight of the polyethersulfone polymer, the polyamide polymer and the at least one first protic polar solvent, preferably based on the total weight of the solution (S).

Another object of the present invention is therefore a process wherein the solution (S) comprises in the range from 0.0001 to 8 % by weight of the polyamide polymer based on the total amount of the solution (S).

The solution (S) provided in step i) can furthermore comprise in the range from 62 to 94% by weight, preferably in the range from 74 to 87.9% by weight and particularly preferably in the range from 77 to 87.5% by weight of the at last one first protic polar solvent, based on the sum of the percent by weight of the polyethersulfone polymer, the polyamide polymer and the at least one first protic polar solvent, preferably based on the total weight of the solution (S).

The solution (S) in one embodiment comprises furthermore at least one pore former agent.

"At least one pore former agent" means precisely one pore former agent or a mixture of two or more pore former agents.

Another object of the present invention is therefore a method wherein the solution (S) additionally comprises at least one pore former agent.

Pore former agents are compounds that are not separated from the at least one first protic polar solvent in step ii). In particular, pore former agents do not precipitate but are dissolved when they are immersed into at least one second protic polar solvent in one preferred embodiment of the present invention. This results in pores in the membrane (M). Suitable pore former agents are known to the skilled person. Preferably the pore former agent is selected from the group consisting of ethylene glycol, diethylene glycol, methanol, ethanol, isopropanol, polyvinylpyrrolidone, triblock copolymers of polyethylene oxide-polyphenylene oxide-polyethylene oxide, polyethylene glycol and glycerol. triblock copolymers of polyethylene oxide-polyphenylene oxide-polyethylene oxide are also known under the trade name pluronic. Another object of the present invention is therefore a process wherein the solution (S) additionally comprises at least one pore former agent selected from the group consisting of polyvinylpyrrolidone, polyethylene glycol and glycerol.

If the solution (S) comprises at least one pore former agent, the solution (S) generally comprises in the range from 0.0001 to 15% by weight, preferably from 1 to 8% by weight and particularly preferably from 2 to 7% by weight of the at least one pore former agent, based on the total weight of the solution (S).

The solution (S) can optionally comprise further additives. Suitable further additives are known to the skilled person and are, for example, flame retardants, plasticizers and antioxidants.

Preferably, the solution (S) does not comprise further additives.

To the person skilled in the art it should be clear that if the solution (S) comprises at least one pore former agent, the percent by weight of the at least one first protic polar solvent is reduced accordingly so that the percent by weight of the polyethersulfone polymer, of the polyamide polymer, of the at least one first protic polar solvent and of the at least one pore former agent add up to 100%.

If the solution (S) comprises further additives, the solution (S) generally comprises in the range from 0.1 to 20% by weight, preferably in the range from 0.5 to 10% by weight and particularly preferred in the range from 1 to 5% by weight of the further additives, based on the total weight of the solution (S).

To the person skilled in the art it should be clear that if the solution (S) comprises further additives, the percent by weight of the at least one first protic polar solvent is reduced acordingly so that the percent by weight of the polyethersulfone polymer, of the polyamide polymer, of the at least one first protic polar solvent and of the further additives add up to 100%.

The percent by weight of the polyethersulfone polymer, the polyamide polymer, the at least one first protic polar solvent and optionally the at least one pore former agent and the further additives generally add up to 100%. If no at least one pore former agent and no further additives are comprised in the solution (S), then the percent by weight of the polyethersulfone polymer, the polyamide polymer and the at least one first protic polar solvent generally add up to 100%.

As the at least one first protic polar solvent, any protic polar solvent in which the polyethersulfone polymer and the polyamide polymer are soluble are suitable. "Soluble" is to be understood as meaning that the amount of polyethersulfone polymer and polyamide polymer that dissolve in the at least one first protic polar solvent at room temperature (20°C) is not less than 10% by weight, preferably not less than 20% by weight and especially not less than 25% by weight, based on the total weight of the solution (S).

Preferably, the at least one first polar solvent is at least one fluorinated protic polar solvent.

Another object of the present invention is therefore a process wherein the at least one first protic polar solvent is at least one flourinated protic polar solvent.

Suitable at least one fluorinated protic polar solvents are known to the skilled person. Preferably, the at least one first protic polar solvent is at least one fluorinated protic polar solvent which is selected from the group consisting of 1,1,1,3,3,3-hexafluoro-2-propanol and trifluorethanol.

Another object of the present invention is therefore a process wherein the at least one first protic polar solvent is selected from the group consisting of 1,1,1,3,3,3-hexafluoro-2-propanol and trifluorethanol.

### Polyethersulfone polymer

Polyethersulfone polymers are a class of polymers known to the person skilled in the art. In principle, it is possible to use any of the polyethersulfone polymers that are known to the person skilled in the art and/or that can be produced by known methods. The polyethersulfone polymers can be homopolymers or copolymers. Appropriate methods for the preparation of polyethersulfone polymers are explained at a later stage below. Preferred polyethersulfone polymers are composed of units of the general formula I: 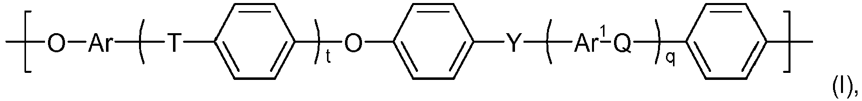 where the definitions of the symbols t, q, Q, T, Y, Ar, and Ar¹ are as follows:
- t and q:: are mutually independently 0, 1, 2, or 3,
- Q, T, and Y:: are mutually independently respectively a chemical bond or group selected from -O-, -S-, -SO₂- S=O, C=O, -N=N- and -CR^{a}R^{b}-, where R^{a} and R^{b} are mutually independently respectively a hydrogen atom or a C₁-C₁₂-alkyl, C₁-C₁₂-alkoxy or C₆-C₁₈-aryl group, and where at least one of Q, T and Y is -SO₂-, and
- Ar and Ar¹:: are mutually independently an arylene group having from 6 to 18 carbon atoms.

If Q, T, or Y, with the abovementioned preconditions, is a chemical bond, this means that the adjacent group on the left-hand side and the adjacent group on the right-hand side have direct linkage to one another by way of a chemical bond.

However, it is preferable that Q, T, and Y in formula I are mutually independently selected from -O- and -SO₂-, with the provision that at least one of the group consisting of Q, T, and Y is -SO₂-.

To the extent that Q, T, or Y is -CR^{a}R^{b}-, R^{a} and R^{b} are mutually independently respectively a hydrogen atom or a C₁-C₁₂-alkyl, C₁-C₁₂-alkoxy or C₆-C₁₈-aryl group.

Preferred C₁-C₁₂-alkyl groups comprise linear and branched, saturated alkyl groups having from 1 to 12 carbon atoms. Particular mention may be made of the following moieties: C₁-C₆-alkyl moiety, such as methyl, ethyl, n-propyl, iospropyl, n-butyl, sec-butyl, 2- or 3-methylpentyl, and longer-chain moieties, such as unbranched heptyl, octyl, nonyl, decyl, undecyl, and lauryl, and the singly or multiply branched analogs thereof.

Alkyl moieties that can be used in the abovementioned C₁-C₁₂-alkoxy groups that can be used are the alkyl groups defined at an earlier stage above having from 1 to 12 carbon atoms. Cycloalkyl moieties that can be used with preference in particular comprise C₃-C₁₂-cycloalkyl moieties, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, cyclohexylmethyl, -dimethyl, and -trimethyl.

Ar and Ar¹ are mutually independently C₆-C₁₈-arylene groups. On the basis of the starting materials described at a later stage below, Ar is preferably derived from an electron-rich aromatic substance that is readily susceptible to electrophilic attack, and that is preferably selected from the group consisting of hydroquinone, resorcinol, dihydroxynaphthalene, in particular 2,7-dihydroxynaphthalene, and 4,4'-bisphenol. Ar¹ is preferably an unsubstituted C₆- or C₁₂-arylene group.

Particular C₆-C₁₈-arylene groups Ar and Ar¹ that can be used are phenylene groups, such as 1,2-, 1,3-, and 1,4-phenylene, naphthylene groups, such as 1,6-, 1,7-, 2,6-, and 2,7-naphthylene, and also the arylene groups derived from anthracene, from phenanthrene, and from naphthacene.

It is preferable that, in the preferred embodiment of formula I, Ar and Ar¹ are selected mutually independently from the group consisting of 1,4-phenylene, 1,3-phenylene, naphthylene, in particular 2,7-dihydroxynaphthylene, and 4,4'-bisphenylene.

Preferred polyarylene ethers are those comprising at least one of the following units la to Io as repeating structural units:

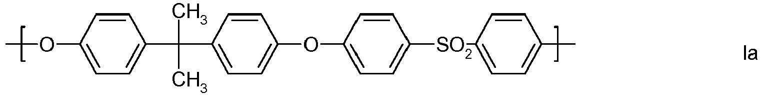

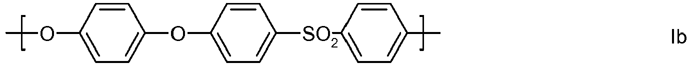

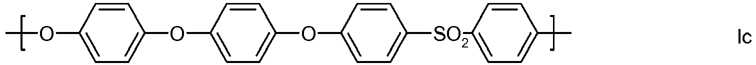

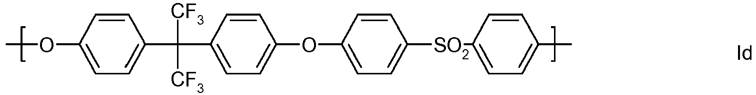

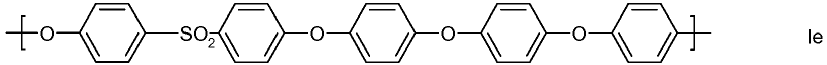

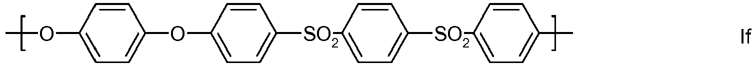

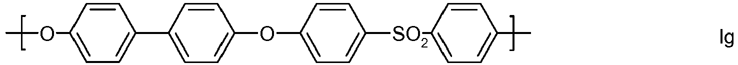

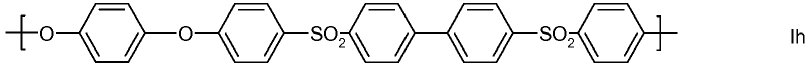

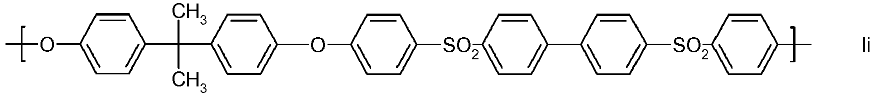

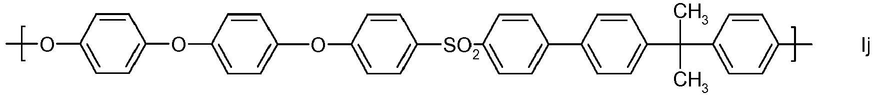

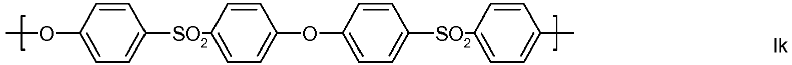

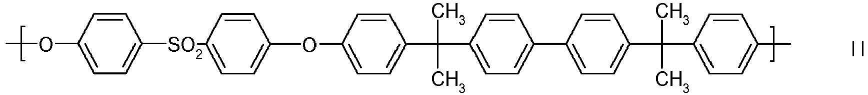

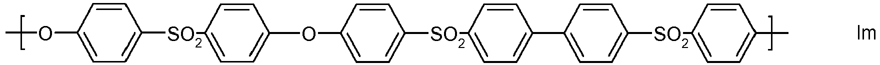

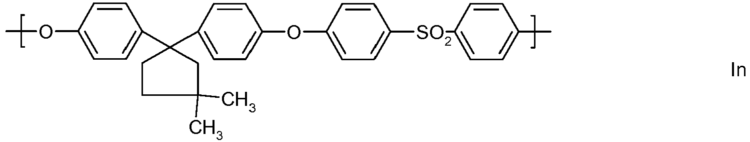

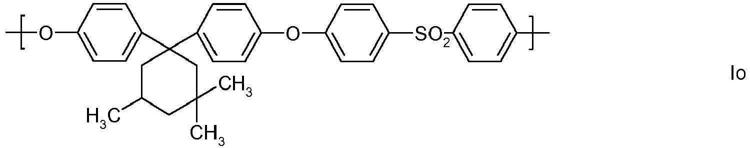

Other preferred units in addition to the preferred units Ia to Io are those in which one or more 1,4-phenylene units which derive from hydroquinone have been replaced by 1,3-phenylene units which derive from resorcinol, or by naphthylene units which derive from dihydroxynaphthalene.

Particularly preferred units of the general formula I are the units la, Ig, and Ik. Particular preference is moreover given to polyethersulfone polymers which are composed essentially of one type of units of the general formula I, in particular of a unit selected from la, Ig, and Ik.

In one particularly preferred embodiment, Ar = 1,4-phenylene, t = 1, q = 0, T is a chemical bond, and Y = SO₂. Particularly preferred polyethersulfone polymers composed of the abovementioned repeating unit are termed polyphenylene sulfone (PPSU) (formula Ig).

In another particularly preferred embodiment, Ar = 1,4-phenylene, t = 1, q = 0, T = C(CH₃)₂, and Y = SO₂. Particularly preferred polyethersulfone polymers composed of the abovementioned repeating unit are termed polysulfone (PSU) (formula la).

In another particularly preferred embodiment, Ar = 1,4-phenylene, t = 1, q = 0, and T = Y = SO₂. Particularly preferred polyethersulfone polymers composed of the abovementioned repeating unit are termed polyether sulfone (PESU) (formula Ik).

For the purposes of the present invention, abbreviations, such as PPSU, PESU, and PSU are in accordance with DIN EN ISO 1043-1 (Plastics - Symbols and abbreviated terms - Part 1: Basic polymers and their special characteristics (ISO 1043-1:2001); German version EN ISO 1043-1:2002).

The weight-average molar masses of the polyethersulfone polymers are preferably from 10 000 to 300 000 g/mol, in particular from 15 000 to 120 000 g/mol, particularly preferably from 18 000 to 100 000 g/mol, determined by means of gel permeation chromatography in the solvent dimethylacetamide against narrowly distributed polymethyl methacrylates as standard.

Production processes which lead to the abovementioned polyethersulfone polymers are known per se to the person skilled in the art and are described by way of example in Herman F. Mark, "Encyclopedia of Polymer Science and Technology", third edition, volume 4, 2003, "Polysulfones" chapter on pages 2 to 8, and also Hans R. Kricheldorf, "Aromatic Polyethers" in: Handbook of Polymer Synthesis, second edition, 2005 on pages 427 to 443.

Particular preference is given to the reaction of at least one aromatic compound having two halogen substituents and of at least one aromatic compound having two functional groups which are reactive toward abovementioned halogen substituents, in aprotic polar solvents in the presence of anhydrous alkali metal carbonate, in particular sodium carbonate, potassium carbonate, calcium carbonate, or a mixture thereof, very particular preference being given here to potassium carbonate. A particularly suitable combination is N-methyl-2-pyrrolidone as solvent and potassium carbonate as base.

It is preferable that the polyethersulfone polymers have either terminal halogen groups, in particular terminal chlorine groups, or etherified terminal groups, in particular terminal alkyl ether groups, where these are obtainable via reaction of the terminal OH groups or terminal phenolate groups with suitable etherifying agents.

Examples of suitable etherifying agents are monofunctional alkyl or aryl halide, for example C₁-C₆-alkyl chloride, C₁-C₆-alkyl bromide, or C₁-C₆-alkyl iodide, preferably methyl chloride, or benzyl chloride, benzyl bromide, or benzyl iodide, or a mixture thereof. Preferred terminal groups for the purposes of the polyethersulfone polymers are halogen, in particular chlorine, alkoxy, in particular methoxy, aryloxy, in particular phenoxy, and benzyloxy.

### Polyamide polymer

As polyamide polymer, any polyamide polymer that can be dissolved in the at least one first protic polar solvent is suitable. The polyamide polymer can be a homopolymer or a copolymer.

Preferred polyamide polymers are semicrystalline or amorphous polyamide polymers.

Examples of polyamide polymers are those that derive from lactams having from 7 to 13 ring members. Other suitable polyamide polymers are those obtained through reaction of dicarboxylic acids with diamines.

Examples of polyamide polymers that derive from lactams are polyamide polymers that derive from polycaprolactam, from polycaprylolactam, and/or from polylaurolactam.

If polyamide polymers are used that are obtainable from dicarboxylic acids and diamines, dicarboxylic acids that can be used are alkanedicarboxylic acids having from 6 to 14 carbon atoms, preferably from 6 to 10 carbon atoms. Aromatic dicarboxylic acids are also suitable.

Examples that may be mentioned here as dicarboxylic acids are adipic acid, azelaic acid, sebacic acid, dodecanedicarboxylic acid, and also terephthalic acid and/or isophthalic acid.

Examples of suitable diamines are alkanediamines, having from 4 to 14 carbon atoms, in particular alkanediamines having from 6 to 8 carbon atoms, and also aromatic diamines, for example m-xylylenediamine, di(4-aminophenyl)methane, di(4-aminocyclohexyl)methane, 2,2-di(4-aminophenyl)propane, 2,2-di(4-aminocyclohexyl)-propane, and 1,5-diamino-2-methylpentane.

Other suitable polyamide polymers are those obtainable through copolymerization of two or more of the monomers mentioned above and mentioned below, and mixtures of a plurality of polyamide polymers in any desired mixing ratio.

Preferred polyamide polymers are polyhexamethyleneadipamide, polyhexamethylene-sebacamide, and polycaprolactam, and also nylon-6/6,6, in particular having a proportion of from 75 to 95% by weight of caprolactam units.

Particular preference is given to mixtures of nylon-6 with other polyamide polymers, in particular with nylon-6/6,6 (PA 6/66), particular preference being given to mixtures of from 80 to 50% by weight of PA 6 and from 20 to 50% by weight of PA 6/66, where the PA 6/66 comprises from 75 to 95% by weight of caprolactam units, based on the total weight of the PA 6/66 in the mixture.

The following, non-exclusive list comprises the abovementioned polyamide polymers, and other suitable polyamide polymers, and also the monomers comprised.
AB polymers:

| | |
|---|---|
| PA 4 | Pyrrolidone |
| PA 6 | ε-Caprolactam |
| PA 7 | Enantholactam |
| PA 8 | Caprylolactam |
| PA 9 | 9-Aminopelargonic acid |
| PA 11 | 11-Aminoundecanoic acid |
| PA 12 | Laurolactam |

AA/BB polymers:

| | |
|---|---|
| PA 46 | Tetramethylenediamine, adipic acid |
| PA 66 | Hexamethylenediamine, adipic acid |
| PA 69 | Hexamethlyenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |

| | |
|---|---|
| PA 6I | Hexamethylenediamine, isophthalic acid |
| PA 6-3-T | Trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 6 | Diaminodicyclohexylmethane, adipic acid |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |
| PA 6/66/136 | 4,4'-methylenebis(cyclohexylamine) adipic acid, caprolactam |

Preferred polyamide polymers are PA 6, PA 66, PA PACM 6, PA 6T/6 and PA 6/66/136.

### Step ii)

In step ii), the polyethersulfone polymer and the polyamide polymer comprised in the solution (S) are separated from the at least one first protic polar solvent comprised in the solution (S) to obtain the membrane (M).

In case the solution (S) comprises one or more further polymers, these are also separated in step ii).

In case the solution (S) comprises additionally further solvents that differ from the at least one first protic polar solvent, the polyethersulfone polymer and the polyamide polymer are as well separated from these further solvents that are no protic polar solvents in step ii).

The separation of the polyethersulfone polymer and the polyamide polymer from the at least one first protic polar solvent can be performed by any process known to the skilled person, which is suitable to separate polymers from solvents.

Preferably, the separation in step ii) is performed by a phase inversion process.

Another object of the present invention is therefore a process wherein the separation in step ii) is performed by a phase inversion process.

A phase inversion process within the context of the present invention means a process wherein the dissolved polyethersulfone polymer and the dissolved polyamide polymer are transformed to a solid phase. Therefore, a phase inversion process can also be denoted as a precipitation process. According to step ii), the transformation is performed by separation of the polyethersulfone polymer and the polyamide polymer from the at least one first protic polar solvent. The person skilled in the art knows suitable phase inversion processes.

The phase inversion process can, for example, be performed by evaporation of the at least one first protic polar solvent. It is also possible to cool down the solution (S). During this cooling down, the polyethersulfone polymer and the polyamide polymer comprised in the solution (S) precipitate. Another possibility to perform the phase inversion process is to bring the solution (S) in contact with a gaseous liquid that is a non-solvent for the polyethersulfone polymer and the polyamide polymer. The polyethersulfone polymer and the polyamide polymer will then as well precipitate. Suitable gaseous liquids that are non-solvents for the polyethersulfone polymer and the polyamide polymer are for example the second protic polar solvents described hereinafter in their gaseous state. Another phase inversion process which is preferred within the context of the present invention is the phase inversion by immersing the solution (S) into at least one second protic polar solvent.

Therefore, in one embodiment of the present invention, in step ii) the polyethersulfone polymer and the polyamide polymer comprised in the solution (S) are separated from the at least one first protic polar solvent comprised in the solution (S) by immersing the solution (S) into at least one second protic polar solvent.

Another object of the present invention is therefore a process wherein in step ii) the polyethersulfone polymer and the polyamide polymer comprised in the solution (S) are separated from the at least one first protic polar solvent comprised in the solution (S) by immersing the solution (S) into at least one second protic polar solvent.

This means that the membrane (M) is formed by immersing the soulution (S) into at least one second protic polar solvent.

Suitable at least one second protic polar solvents are known to the skilled person. The at least one second protic polar solvent is preferably a non-solvent for the polyethersulfone polymer and the polyamide polymer and is a good solvent for the at least one first protic polar solvent.

Preferred at least one second protic polar solvents are water, methanol, ethanol, n-propanol, iso-propanol, glycerol, ethylglycol and mixtures thereof.

Another object of the present invention is therefore a method wherein the at least one second protic polar solvent is selected from the group consisting of water, methanol, ethanol, n-propanol, iso-propanol, glycerol and ethyl glycol.

Step ii) usually comprises a provision of the solution (S) in a form that corresponds to the form of the membrane (M) which is obtained in step ii).

Therefore, in one embodiment of the present invention, step ii) comprises a casting of the solution (S) to obtain a film of the solution (S) or a passing of the solution (S) through at least one spinneret to obtain at least one hollow fiber of the solution (S).

Another object of the present invention is therefore a process wherein step ii) comprises a casting of the solution (S) to obtain a film of the solution (S) or a passing of the solution (S) through at least one spinneret to obtain at least one hollow fibre of the solution (S).

Therefore, in one embodiment of the present invention, step ii) comprises the following steps.
ii-1) casting the solution (S) provided in step i) to obtain a film of the solution (S),
ii-2) immersing the film of the solution (S) obtained in step ii-1) into at least one second protic polar solvent to obtain the membrane (M) which is in the form of a film.

Another object of the present invention is therefore a process wherein step ii) comprises the following steps:
ii-1) casting the solution (S) provided in step i) to obtain a film of the solution (S),
ii-2) immersing the film of the solution (S) obtained in step ii-1) into at least one second protic polar solvent to obtain the membrane (M).

This means that the membrane (M) is formed by immersing a film of the solution (S) into at least one second protic polar solvent.

In step ii-1), the solution (S) can be casted by any method known to the skilled person. Usually, the solution (S) is casted with a casting knife that is heated to a temperature in the range from 20 to 150°C, preferably in the range from 80 to 100°C.

The solution (S) is usually casted on a substrate that does not react with the polyethersulfone polymer, the polyamide polymer or the at least one first protic polar solvent comprised in the solution (S).

Suitable substrates are known to the skilled person and are, for example, selected from glass plates and polymer fabrics such as non-woven materials.

The thickness of the film of the solution (S) is typically in the range from 10 to 1000 µm, preferably in the range from 25 to 500 µm and particularly preferably in the range from 100 to 300 µm.

In step ii-2), the immersion of the film of the solution (S) into the at least one second protic polar solvent can be performed by any method known to the skilled person. The method is, for example, described in C. A. Smolders et al J. Membr. Sci.: Vol 73, (1992), 259.

For the at least one second protic polar solvent, the embodiments and preferences described above hold true.

The at least one second protic polar solvent is generally comprised in a precipitation bath. The film of the solution (S) is then immersed in this precipitation bath. In general, the film of the solution (S) is immersed into the precipitation bath together with the substrate.

The precipitation bath can additionally comprise further solvents that differ from the second protic polar solvent. For example, the precipitation bath can additionally comprise aprotic polar solvents. Suitable aprotic polar solvents are known to the skilled person and are for example selected from the group consisting of N-methyl-pyrrolidone, dimethylformamide, dimethylacetamide, tetrahydrofuran, dimethylsulfoxide and acetone.

The temperature of the precipitation bath lies typically in the range from 20 to 100°C, preferably in the range from 50 to 80°C and particularly preferred in the range from 60 to 70°C.

The precipitation bath can be agitated. Preferably, the precipitation bath is not agitated.

In the precipitation bath, the membrane (M) precipitates and can be removed therefrom.

After the removing from the precipitation bath, the membrane (M) can be post-treated further, for example by drying or by coating of the membrane (M). These treatments of the membrane (M) are known to the skilled person.

In another embodiment of the present invention, step ii) comprises the following steps.
ii-a) passing the solution (S) provided in step i) through at least one spinneret to obtain at least one hollow fiber of the solution (S),
ii-b) immersing the at least one hollow fiber of the solution (S) obtained in step ii-a) into at least one second protic polar solvent to obtain the membrane (M) which is in the form of a hollow fiber or of a multibore.

Another object of the present invention is therefore a process wherein step ii) comprises the following steps:
ii-a) passing the solution (S) provided in step i) through at least one spinneret to obtain at least one hollow fibre of the solution (S),
ii-b) immersing the at least one hollow fibre of the solution (S) obtained in step ii-1) into at least one second protic polar solvent to obtain the membrane (M).

This means that the membrane (M) is formed by immersion at least one hollow fiber into at least one second protic polar solvent.

If step ii) comprises the above-described steps ii-a) and ii-b), this process comprises a wet spinning process.

In step ii-a), the solution (S) provided in step i) is passed through at least one spinneret to obtain at least one hollow fiber of the solution (S).

"At least one spinneret" means precisely one spinneret, and also two or more spinnerets.

Any at least one spinneret known to the skilled person can be used in step ii-a).

The at least one spinneret can comprise one single bore or two or more bores. If the at least one spinneret comprises two or more bores, the hollow fiber of the solution (S) which is obtained in step ii-a) is a multibore hollow fiber. A multibore hollow fiber i a hollow fiber which has two or more bores.

When the solution (S) is passed through the at least one spinneret in step ii-a), then the solution (S) is generally extruded through the at least one spinneret into a gaseous atmosphere, in particular in air. The solution (S) can be passed through the at least one spinneret in the presence or absence of a bore liquid.

If a bore liquid is present in step ii-a), then the at least one spinneret generally comprises at least one bore through which the bore liquid can be extruded.

A "bore liquid" for the purposes of the present invention is to be understood as meaning a liquid which comes into contact with the solution (S) provided in step i) in or directly after the bore of the spinneret. The bore liquid has coagulation properties and serves to precipitate, form and stabilize the bore, the hollow fiber during the wet spinning process.

The gap between the spinneret and the at least one protic polar solvent, preferably comprised in a precipitation bath, is known as a "dry zone" and is preferably from 0.1 to 100 cm, in particular from 0.5 to 50 cm and preferably from 1 to 25 cm.

The at least one second protic polar solvent and the bore liquid used are preferably liquids which are fully miscible with the first protic polar solvent of the solution (S) provided in step i), as long as the polyethersulfone polymer and the polyamide polymer are insoluble or partially insoluble in the bore liquid and the at last one second protic polar solvent.

The person skilled in the art will chose the bore liquid and the at least one second protic polar solvent in relation to the first protic polar solvent of the solution (S) provided in step i).

The bore liquid is preferably at least one second protic polar solvent. Therefore, for the bore liquid, the embodiments and preferences described above for the at least one second protic polar solvent hold true.

In step ii-b), the at least one hollow fiber of the solution (S) obtained in step ii-a) is immersed into at least one second protic polar solvent to obtain the membrane (M). To the person skilled in the art it is clear that the membrane (M) is in the form of a hollow fiber, when at least one hollow fiber of the solution (S) is immersed into the at least one second protic polar solvent.

If the at least one spinneret in step ii-a) comprises two or more bores, then the hollow fiber is in the form of a multibore and therefore the membrane (M) obtained in step ii-b) is as well in the form of a multibore.

For step ii-b), the same embodiments and preferences described above for step ii-2) hold true.

### Membrane (M)

In step ii), the membrane (M) is obtained.

The membrane (M) comprises the polyethersulfone polymer and the polyamide polymer. In case the solution (S) contained a further polymer, the membrane (M) also comprises the further polymer. In one embodiment the membrane (M) does not comprise a further polymer.

The polyethersulfone polymer and the polyamide polymer are preferably homogeneously distributed in the membrane (M).

The membrane (M) comprises generally in the range from 50 to 99,9999% by weight, preferably in the range from 71 to 99,997% by weight and particularly preferably in the range from 82 to 99,98% by weight of the polyethersulfone polymer and in the range from 0,0001 to 50% by weight, preferably in the range from 0,003 to 29% by weight and particularly preferably in the range from 0,02 to 18% by weight of the polyamide polymer, based on the sum of the percent by weight of the polyethersulfone polymer and the polyamide polymer, preferably based on the total weight of the membrane (M). If the solution (S) comprises further additives, then generally the membrane (M) as well comprises the further additives.

The at least one pore former agent which in one embodiment of the present invention was comprised in the solution (S) generally is not comprised in the membrane (M) as the at least one pore former agent typically is dissolved during the formation of the membrane (M).

Therefore, in one embodiment, the membrane (M) is essentially free from the at least one pore former agent. "Essentially free" within the context of the present invention means that the membrane (M) comprises at most 1% by weight, preferably at most 0.5% by weight and particularly preferably at most 0.1% by weight of the at least one pore former agent, based on the total weight of the membrane (M).

The membrane (M) comprises at least 0.0001% by weight, preferably at least 0.001% by weight and particularly preferably at least 0.01% by weight of the at least one pore former agent, based on the total weight of the membrane (M).

During the formation of the membrane (M), the polyethersulfone polymer and the polyamide polymer are separated from the at least one first protic polar solvent. Therefore, the obtained membrane (M) is essentially free from the at least one first protic polar solvent. "Essentially free" within the context of the present invention means that the membrane (M) comprises at most 1% by weight, preferably at most 0.5% by weight and particularly preferably at most 0.1% by weight of the at least one first protic polar solvent, based on the total weight of the membrane (M). The membrane (M) comprises at least 0.0001% by weight, preferably at least 0.001% by weight and particularly preferably at least 0.01% by weight of the at least one first protic polar solvent, based on the total weight of the membrane (M).

The percent by weight of the polyether sulfone polymer, the polyamide polymer and optionally of the further additives, the pore former agent and the at least one first aprotic polar solvent comprised in the membrane (M) generally add up to 100 %.

Depending on the steps comprised in step ii), the membrane (M) obtained in step ii) has a form which is selected from the group consisting of a film, a hollow fiber or a multibore.

Another object of the present invention is therefore a process wherein wherein the membrane (M) obtained in step ii) is selected from the group consisting of a film, a hollow fibre and a multibore.

If the membrane (M) is in the form of a film, the thickness is preferably in the range from 10 to 1 000 µm, particularly preferably in the range from 50 to 500 um and more preferably in the range from 100 to 300 µm.

If the membrane (M) is in the form of a hollow fiber, its thickness is preferably in the range from 10 to 200 µm, preferably in the range from 20 to 100 µm.

If the membrane (M) is in the form of a multibore, the thickness is preferably in the range from 2 to 200 µm, preferably in the range from 20 to 100 µm.

Within the context of the present invention, "the thickness of the multibore" and "the thickness of the hollow fibre" refer to the wall thickness and not to the diameter of the fibre.

Another object of the present invention is therefore also a membrane (M) which comprises a polyethersulfone polymer and a polyamide polymer.

The inventive membrane (M) exhibits a high elongation at break.

Therefore, another object of the present invention is the use of a polyamide polymer in a membrane (M), which comprises a polyethersulfone polymer, to increase the elongation at break of the membrane (M).

Another object of the present invention is the use of a polyamide polymer in a membrane (M) which comprises a polyethersulfone polymer in a process selected from the group consisting of an ultrafiltration process and a reverse osmosis process.

Ultrafiltration processes and reverse osmosis processes are known to the skilled person.

The present invention is described in more detail by the examples hereinafter without being restricted thereto.

### Examples

### Examples 1 to 15

Ultrason E3010 (trade name of PESU of BASF SE) was used as polyethersulfone polymer. As polyamide polymer Ultramide T (trade name of PA 6T/6 of BASF SE) or Ultramide 1C (trade name of PA 6/66/136 of BASF SE) was used. In the comparative examples N-methyl-2-pyrrolidone (NMP) was used as solvent, in the inventive examples 1,1,1,3,3,3-hexafluoro-2-propanol (solvent H) and/or trifluorethanol (solvent T) was used as first protic polar solvent. The total polyethersulfone polymer concentration in the solution (S), the polyamide polymer concentration and the solvent concentration was set as shown in table 1. The type and concentration of further additives is as well given in table 1.

The solutions (S) were casted on a glass plate with a casting knife heated to a temperature given in table 1. The thickness of the casted film was maintained at 200 µm. Each film was left to dry under vacuum at the respective drying temperature for a few days until the solvent was completely removed and a dense film was obtained.

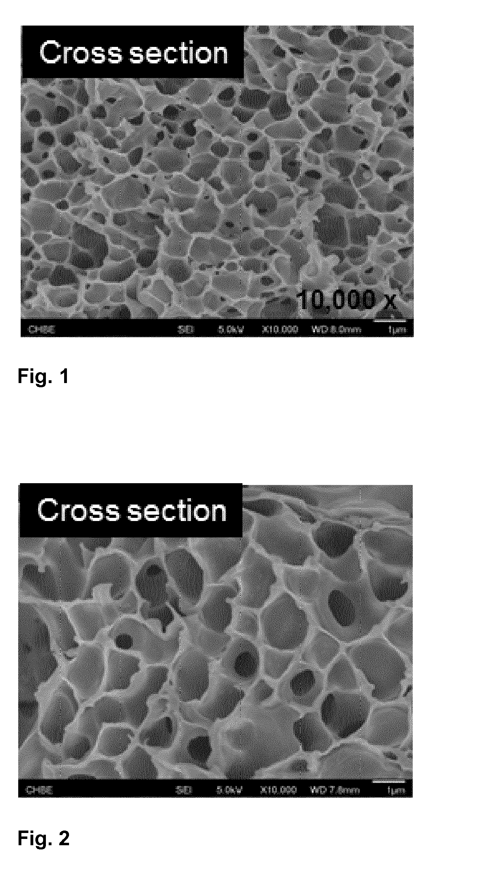

The morphology of the dense films were observed using FESEM as shown in figure 1 and figure 2. Figure 1 shows the morphology of the dense film obtained from example 1, figure 2 shows the morphology of the dense film obtained from example 6.

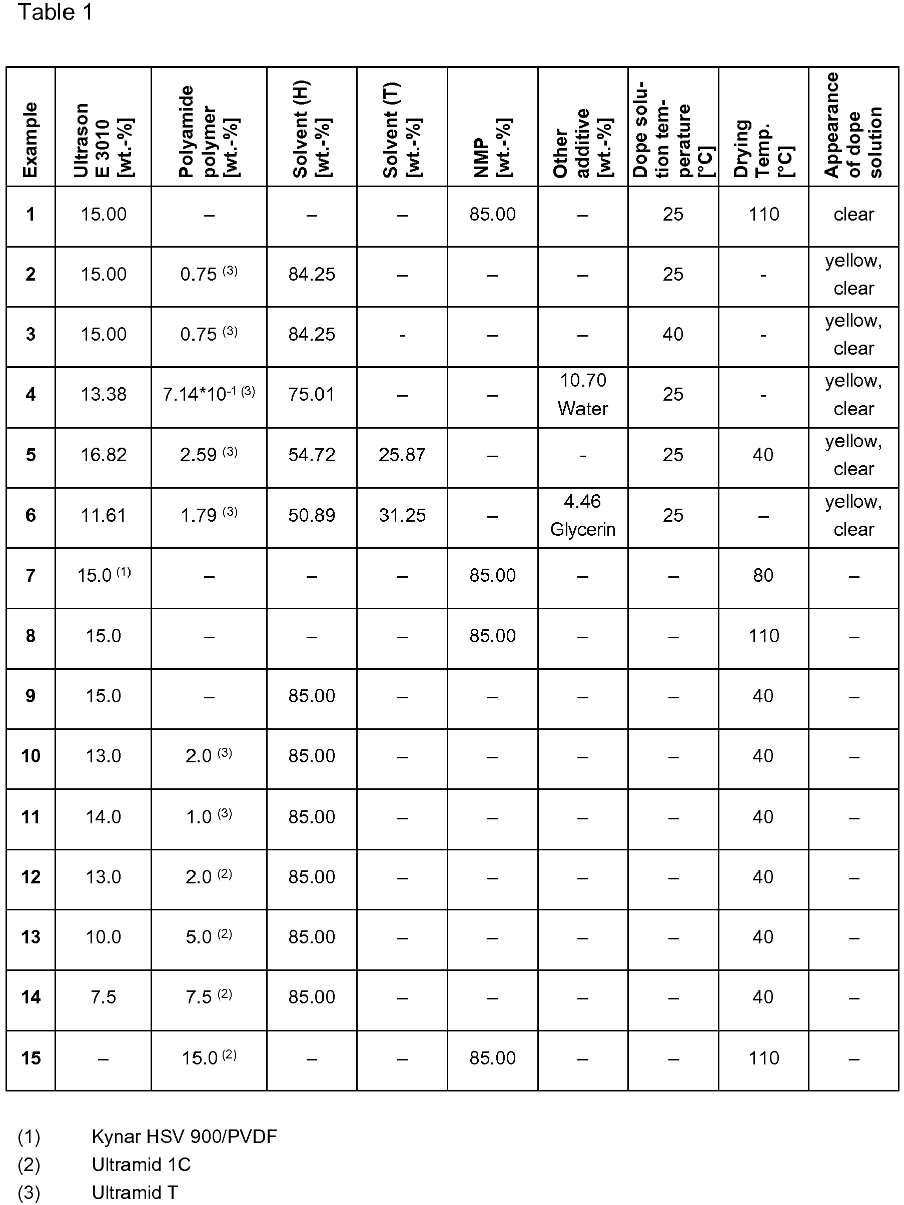

The mechanical strength (such as tensile strength and elongation at break) of the dense films was evaluated by a tensile test instrument (INSTRON 5543). The test was carried out at a strain rate of 10 mm/min and a relative humility of about 57%.

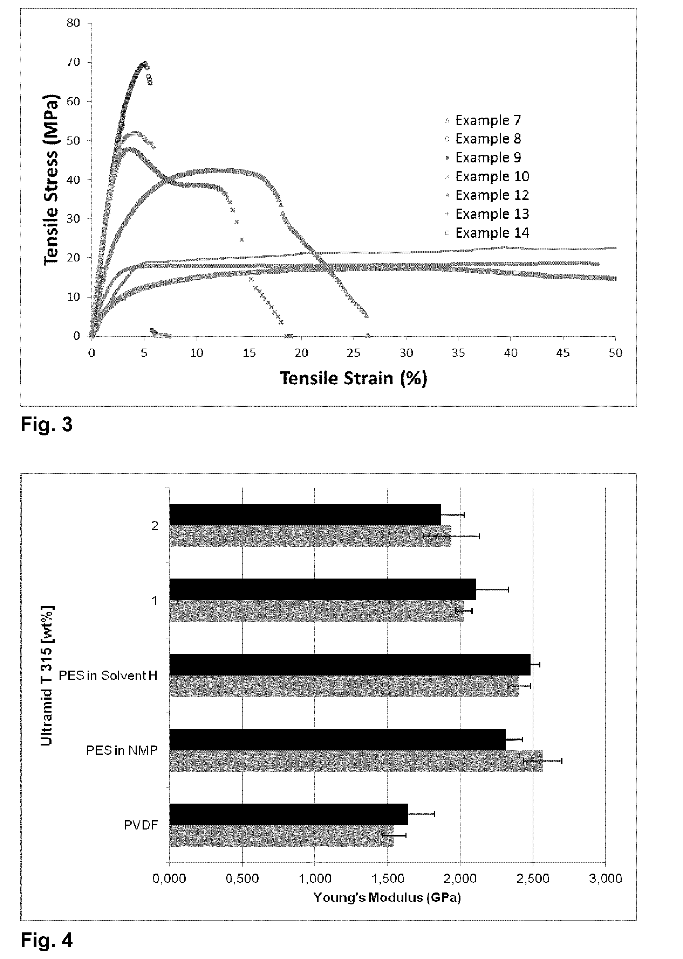

The mechanical strength tests were performed for examples 7 to 15. The results are shown in figures 3 to 9.

Figure 3 shows the stress strain diagram for the obtained membranes (M). The x-axis shows the tensile strain in percent, the y-axis shows the tensile stress in MPa. It can clearly be seen that the polyethersulfone polymer alone is a relatively brittle material which ruptures having only a tensile strain of about 5%. In contrast thereto, when adding a polyamide polymer to the polyethersulfone polymer, the membrane (M) becomes more ductile. When adding only about 5% by weight of the polyamide polymer to the polyethersulfone polymer, the obtained membrane (M) behaves similar to a pure polyamide polymer membrane (M).

Figure 4 gives the Young's modulus in GPa for the membranes (M) on the x-axis. As polyamide polymer Ultramid T is added (corresponds to examples 10 and 11) and for comparison the Young's modulus of a membrane (M) made from pure polyethersulfone polymer (corresponds to examples 8 and 9) and made from pure PVDF (corresponds to example 7) is shown as well. The Young's modulus by the addition of the polyamide polymer is only decreased to a little extent with respect to the pure polyethersulfone membrane (M). In each case the upper bar shows the Young's Modulus in y-direction, the lower bar shows the Young's Modulus in x-direction.

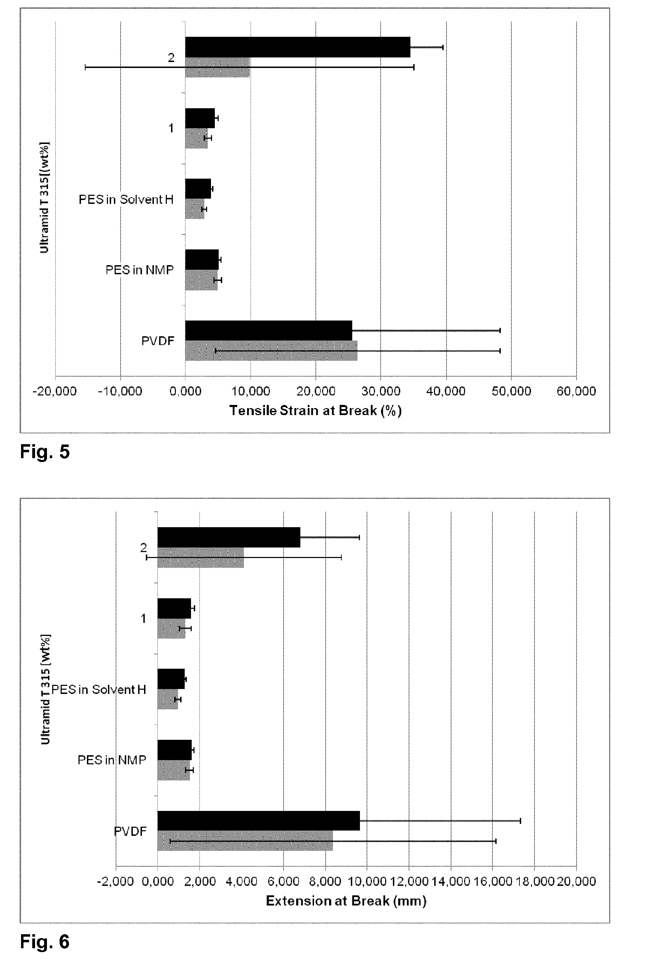

Figure 5 gives the tensile strain at break for the same membranes (M) as the ones given in figure 4. It can clearly be seen that the tensile strain at break of the membranes (M) is significantly increased when adding about 2% by weight of the polyamide polymer to the polyethersulfone polymer, whereas when adding only 1% by weight, the tensile strain at break is similar to the one of the pure polyethersulfone polymer membranes (M). In each case the upper bar shows the tensile strain at break in y-direction, the lower bar shows the tensile strain at break in x-direction.

Figure 6 shows the extension at break for the same membranes (M) as the ones of figures 4 and 5. The behavior of the membranes (M) concerning the extension at break is similar to their tensile strain at break behavior given in figure 5. In each case the upper bar shows the extension at break in y-direction, the lower bar shows the extension at break in x-direction.

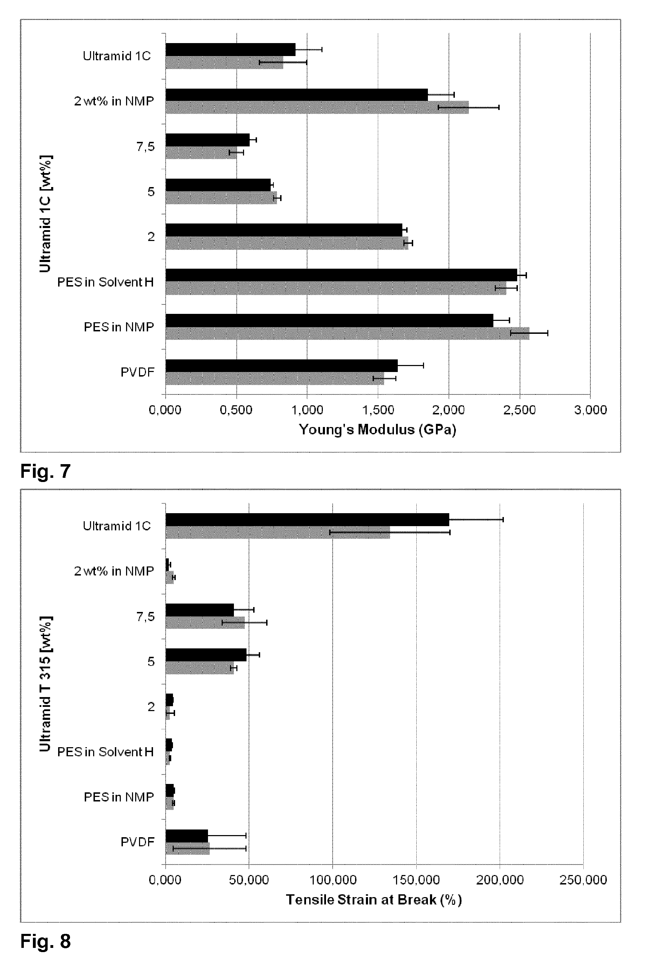

Figure 7 gives the Young's modulus in GPa for the membranes (M) on the x-axis. As polyamide polymer Ultramid 1C is added (corresponds to examples 12 to 14) and for comparison the Young's modulus of a membrane (M) made from pure polyethersulfone polymer (corresponds to examples 8 and 9), made from pure Ultramid 1C (corresponds to example 15) and made from pure PVDF (corresponds to example 7) is shown as well. The Young's modulus by the addition of the polyamide polymer decreases with increasing polyamide polymer content and is lower than the one of a pure polyethersulfone membrane (M). In each case the upper bar shows the Young's Modulus in y-direction, the lower bar shows the Young's Modulus in x-direction.

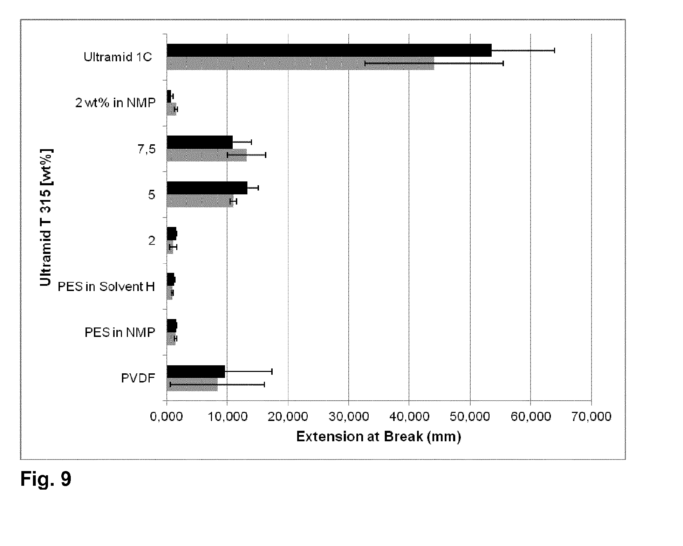

Figures 8 and 9 give the tensile strain at break and the extension at break for the same membranes (M) as the ones given in figure 7. It can clearly be seen that the tensile strain at break and the extension at break increases with increasing polyamide polymer content and that it increases with respect to the pure polyethersulfone membrane (M). In each case the upper bar shows the tensile strain at break and the extension at break in y-direction, the lower bar shows the tensile strain at break and the extension at break in x-direction.

## Claims

1. A process for the preparation of a membrane (M), which comprises a polyethersulfone polymer and a polyamide polymer, comprising the steps:
i) providing a solution (S), which comprises the polyethersulfone polymer, the polyamide polymer and at least one first protic polar solvent,
ii) separating the polyethersulfone polymer and the polyamide polymer comprised in the solution (S) from the at least one first protic polar solvent comprised in the solution (S) to obtain the membrane (M).

2. The process according to claim 1, wherein the separation in step ii) is performed by a phase inversion process.

3. The process according to claim 1 or 2, wherein in step ii) the polyethersulfone polymer and the polyamide polymer comprised in the solution (S) are separated from the at least one first protic polar solvent comprised in the solution (S) by immersing the solution (S) into at least one second protic polar solvent.

4. The process according to any one of claims 1 to 3, wherein the at least one first protic polar solvent is at least one flourinated protic polar solvent.

5. The process according to any one of claims 1 to 4, wherein the at least one first protic polar solvent is selected from the group consisting of 1,1,1,3,3,3-hexafluoro-2-propanol and trifluorethanol.

6. The process according to any one of claims 3 to 5, wherein the at least one second protic polar solvent is selected from the group consisting of water, methanol, ethanol, n-propanol, iso-propanol, glycerol and ethyl glycol.

7. The process according to any one of claims 1 to 6, wherein the solution (S) comprises in the range from 5 to 30 % by weight of the polyethersulfone polymer based on the total amount of the solution (S).

8. The process according to any one of claims 1 to 8, wherein the solution (S) comprises in the range from 0.0001 to 8 % by weight of the polyamide polymer based on the total amount of the solution (S).

9. The process according to any one of claims 1 to 8, wherein the solution (S) additionally comprises at least one pore former agent.

10. The process according to any one of claims 1 to 9, wherein step ii) comprises a casting of the solution (S) to obtain a film of the solution (S) or a passing of the solution (S) through at least one spinneret to obtain at least one hollow fibre of the solution (S).

11. The process according to any one of claims 1 to 10, wherein the membrane (M) obtained in step ii) is selected from the group consisting of a film, a hollow fibre and a multibore.

12. The process according to any one of claims 1 to 11, wherein step ii) comprises the following steps:
ii-1) casting the solution (S) provided in step i) to obtain a film of the solution (S),
ii-2) immersing the film of the solution (S) obtained in step ii-1) into at least one second protic polar solvent to obtain the membrane (M).

13. The process according to any one of claims 1 to 11, wherein step ii) comprises the following steps:
ii-a) passing the solution (S) provided in step i) through at least one spinneret to obtain at least one hollow fibre of the solution (S),
ii-b) immersing the at least one hollow fibre of the solution (S) obtained in step ii-1) into at least one second protic polar solvent to obtain the membrane (M).

14. The use of a polyamide polymer in a membrane (M), which comprises a polyethersulfone polymer, to increase the elongation at break of the membrane (M).

15. A membrane (M), which comprises a polyethersulfone polymer and a polyamide polymer.
